# EUROPEAN PATENT APPLICATION

(11) **EP 3 282 770 A1**
(43) Date of publication of application: **14.02.2018**
(21) Application number: 15888179.7
(22) Date of filing: 10.04.2015
(51) Int. Cl.: H04W 48/16, H04W 52/02, H04W 24/00, H04W 72/00

(54) **DISCOVERY INFORMATION TRANSMISSION METHOD, DEVICE AND COMMUNICATION SYSTEM**

(71) Applicant: Fujitsu Limited, Kawasaki-shi, Kanagawa 211-8588 (JP)
(72) Inventor: WU, Lianhai, Beijing 100025 (CN); XU, Haibo, Beijing 100025 (CN); ZHOU, Hua, Beijing 100025 (CN)
(74) Representative: Haseltine Lake LLP
(86) International application number: PCT/CN2015/076279
(87) International publication number: WO 2016/161622

(57) **Abstract**

A transmission method and apparatus of discovery information and a communications system. The transmission method of discovery information includes: transmitting indication information indicating a size of discovery information by a user equipment to a base station; receiving one or more resources which is/are allocated by the base station according to the indication information; and transmitting the discovery information by using the one or more resources to perform sidelink discovery. Hence, a case of waste of resources or being unable to carry discovery information may be reduced as possible even if sizes of discovery information are different due to different scenarios.

## Description

### Technical Field

This disclosure relates to the field of communications technologies, and in particular to a transmission method and apparatus of discovery information and a communications system.

### Background

In recent years, wireless communications technologies have developed rapidly, 3GPP standardization develops to Rel. 13, and key technologies cover wide configuration of small cells, carrier aggregation (CA), 3D multi-antenna technology (such as multiple input multiple output (MIMO)), and LTE enabling at an unlicensed band (such as licensed-assisted-access), etc.

A sidelink communications mode refers to that a data packet needs not to pass a core network and a base station, and a communications link may be directly established between a user equipment UE 1 and a user equipment UE 2 for communications. The sidelink communications may also be referred to as device to device (D2D) communications. A sidelink discovery process is generally performed before performing sidelink communications. For example, UE 1 needs first to discover whether UE 2 is near before transmitting information to UE 2 in the sidelink communications mode.

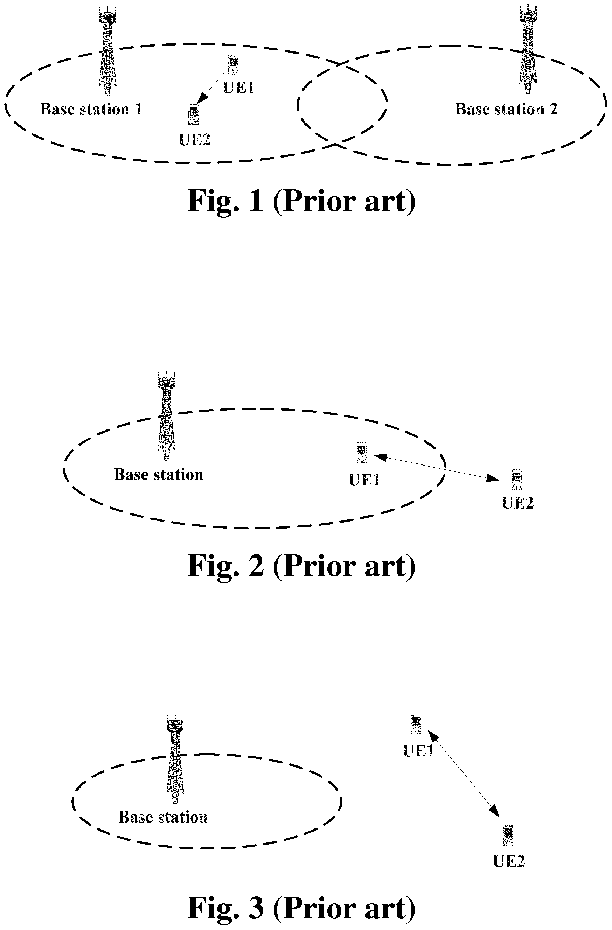

FIG. 1 is a schematic diagram of the sidelink communications, in which sidelink discovery or establishment of sidelink communications by two user equipments (UE 1 and UE 2) under coverage of a base station is shown. FIG. 2 is another schematic diagram of the sidelink communications, in which sidelink discovery or establishment of sidelink communications by two user equipments is shown; UE 1 is under coverage of a base station, and UE 2 is not under the coverage of the base station. FIG. 3 is a further schematic diagram of the sidelink communications, in which sidelink discovery or establishment of sidelink communications by two user equipments (UE 1 and UE 2) that are not under coverage of a base station is shown.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

However, it was found by the inventors that in an existing system, a size of discovery information is fixed to be 232 bits, and in transmitting the discovery information, a UE will select two physical resource block (PRB) pairs from a subframe to carry the discovery information. However, sizes of current discovery information may be different due to different scenarios, which may be greater than 232 bits, or may be less than 232 bits. If new discovery information is less than 232 bits and two PRB pairs are still selected to carry the discovery information, waste of resources will be resulted in; and if new discovery information is greater than 232 bits, it is possible that two PRB pairs are unable to carry the discovery information.

Embodiments of this disclosure provide a transmission method and apparatus of discovery information and a communications system, in which a case of waste of resources or being unable to carry discovery information may be reduced as possible even if sizes of discovery information are different due to different scenarios.

According to a first aspect of the embodiments of this disclosure, there is provided a transmission method of discovery information, applicable to a user equipment, and the method includes:
transmitting indication information indicating a size of discovery information to a base station;
receiving one or more resources which is/are allocated by the base station according to the indication information; and
transmitting the discovery information by using the one or more resources to perform sidelink discovery.

According to a second aspect of the embodiments of this disclosure, there is provided a transmission apparatus of discovery information, configured in a user equipment, and the apparatus includes:
an indication transmitting unit configured to transmit indication information indicating a size of discovery information to a base station;
a resource receiving unit configured to receive one or more resources which is/are allocated by the base station according to the indication information; and
an information transmitting unit configured to transmit the discovery information by using the one or more resources to perform sidelink discovery.

According to a third aspect of the embodiments of this disclosure, there is provided a transmission method of discovery information, applicable to a base station, and the method includes:
receiving indication information indicating a size of discovery information transmitted by a user equipment;
allocating one or more resources for sidelink discovery for the user equipment according to the indication information; and
transmitting the one or more resources to the user equipment.

According to a fourth aspect of the embodiments of this disclosure, there is provided a transmission apparatus of discovery information, configured in a base station, and the apparatus includes:
an indication receiving unit configured to receive indication information indicating a size of discovery information transmitted by a user equipment;
a resource allocating unit configured to allocate one or more resources for sidelink discovery for the user equipment according to the indication information; and
a resource transmitting unit configured to transmit the one or more resources to the user equipment.

According to a fifth aspect of the embodiments of this disclosure, there is provided a communications system, including:
a user equipment configured to transmit indication information indicating a size of discovery information to a base station, receive one or more resources allocated by the base station according to the indication information, and transmit the discovery information by using the one or more resources to perform sidelink discovery; and
a base station configured to receive indication information transmitted by the user equipment, allocate one or more resources for the sidelink discovery for the user equipment according to the indication information, and transmit the one or more resources to the user equipment.

According to another aspect of the embodiments of this disclosure, there is provided a computer readable program code, which, when executed in a base station, will cause a computer unit to carry out the transmission method of discovery information as described above in the base station.

According to a further aspect of the embodiments of this disclosure, there is provided a computer readable medium, including a computer readable program code, which will cause a computer unit to carry out the transmission method of discovery information as described above in a base station.

According to still another aspect of the embodiments of this disclosure, there is provided a computer readable program code, which, when executed in a UE, will cause a computer unit to carry out the transmission method of discovery information as described above in the UE.

According to a further aspect of the embodiments of this disclosure, there is provided a computer readable medium, including a computer readable program code, which will cause a computer unit to carry out the transmission method of discovery information as described above in a UE.

An advantage of the embodiments of this disclosure exists in that the user equipment transmits indication information indicating a size of discovery information to the base station, receives one or more resources which is/are allocated by the base station according to the indication information, and transmits the discovery information by using the one or more resources to perform sidelink discovery. Hence, a case of waste of resources or being unable to carry discovery information may be reduced as possible even if sizes of discovery information are different due to different scenarios.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of this disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram of sidelink communications;
FIG. 2 is another schematic diagram of the sidelink communications;
FIG. 3 is a further schematic diagram of the sidelink communications;
FIG. 4 is a flowchart of the transmission method of discovery information of Embodiment 1 of this disclosure;
FIG. 5 is another flowchart of the transmission method of discovery information of Embodiment 1 of this disclosure;
FIG. 6 is a further flowchart of the transmission method of discovery information of Embodiment 1 of this disclosure;
FIG. 7 is a flowchart of the transmission method of discovery information of Embodiment 2 of this disclosure;
FIG. 8 is a schematic diagram of the transmission apparatus of discovery information of Embodiment 3 of this disclosure;
FIG. 9 is another schematic diagram of the transmission apparatus of discovery information of Embodiment 3 of this disclosure;
FIG. 10 is a schematic diagram of the user equipment of Embodiment 3 of this disclosure;
FIG. 11 is a schematic diagram of the transmission apparatus of discovery information of Embodiment 4 of this disclosure;
FIG. 12 is a schematic diagram of the base station of Embodiment 4 of this disclosure; and
FIG. 13 is a schematic diagram of the communications system of Embodiment 5 of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the existing standards, for a process of discovery by a UE, when the UE is triggered to need to transmit a discovery signal, the UE will notify a base station via a *SidelinkUEInformation* message that it is going to perform sidelink discovery, and notify via *discTxResourceReq-r12* to the base station of the number of pieces of discovery information to be transmitted, requiring the base station to allocate discovery resources.

Table 1 shows a case of the *SidelinkUEInformation* message.

**Table 1 SidelinkUEInformation**

| | | |
|---|---|---|
| -ASN1START | | |
| | | |
| SidelinkUEInformation-r12 : : = | SEQUENCE { | |
| criticalExtensions | CHOICE { | |
| c1 | CHOICE { | |
| sidelinkUEInformation-r12 SidelinkUEInformation-r12-IEs, | | |
| spare3 NULL, spare2 NULL, spare1 NULL | | |
| }, | | |
| criticalExtensionsFuture | SEQUENCE {} | |
| } | | |
| } | | |
| | | |
| SidelinkUEInformation-r12-IEs : : = SEQUENCE { | | |
| commRxInterestedFreq-r12 | ARFCN-ValueEUTRA-r9 | OPTIONAL, |
| commTxResourceReq-r12 | SL-CommTxResourceReq-r12 | OPTIONAL, |
| discRxInterest-r12 | ENUMERATED {true} | OPTIONAL, |
| discTxResourceReq-r12 | INTEGER (1..63) | OPTIONAL, |
| lateNonCriticalExtension | OCTET STRING | OPTIONAL, |
| nonCriticalExtension | SEQUENCE {} | OPTIONAL |
| } | | |
| | | |
| SL-CommTxResourceReq-r12 : : = | SEQUENCE { | |
| carrierFreq-r12 | ARFCN-ValueEUTRA-r9 | OPTIONAL, |
| destinationInfoList-r12 | SL-DestinationInfoList-r12 | |
| } | | |
| | | |
| SL-DestinationInfoList-r12 : : = SEQUENCE (SIZE (1..maxSL-Dest-r12)) OF | | |
| SL-DestinationIdentity-r12 | | |
| | | |
| SL-DestinationIdentity-r12 : : = BIT STRING (SIZE (24)) | | |
| | | |
| -ASN1STOP | | |

As shown in Table 1, *discTxResourceReq-r12* is of an INTEGER type, and only the number of pieces of the discovery information may be transmitted to the base station; and a size of each piece of the discovery information is fixed to be 232 bits.

After receiving the information from the UE, the base station will configure discovery resources via an *SL-DiscConfig* IE according to auxiliary information provided by the UE. And the base station may configure the UE with a recovery resource pool, and may also schedule contentionless resources for the UE to transmit the discovery information.

Table 2 shows a case of the *SL-DiscConfig* IE

**Table 2 SL-DiscConfig information element**

| | | |
|---|---|---|
| -- ASN1START | | |
| | | |
| SL-DiscConfig-r12 : : = | SEQUENCE { | |
| discTxResources-r12 | CHOICE { | |
| release | NULL, | |
| setup | CHOICE { | |
| scheduled-r12 | SEQUENCE { | |
| discTxConfig-r12 | SL-DiscResourcePool-r12 OPTIONAL, | |
| -- Need ON | | |
| discTF-IndexList-r12 | SL-TF-IndexPairList-r12 OPTIONAL, | |
| -- Need ON | | |
| discHoppingConfig-r12 | SL-HoppingConfigDisc-r12 | |
| | OPTIONAL | -- Need ON |
| }, | | |
| ue-Selected-r12 | SEQUENCE { | |
| discTxPoolDedicated-r12 | SEQUENCE { | |
| poolToReleaseList-r12 | SL-TxPoolToReleaseList-r12 | |
| OPTIONAL, -- Need ON | | |
| poolToAddModList-r12 | SL-DiscTxPoolToAddModList-r12 | |
| OPTIONAL -- Need ON | | |
| } | | OPTIONAL -- Need |
| ON | | |
| } | | |
| } | | |
| } | | OPTIONAL, -- Need |
| ON | | |
| ... | | |
| } | | |
| | | |
| SL-DiscTxPoolToAddModList-r12 : : = | SEQUENCE (SIZE (1..maxSL-TxPool-r12)) OF | |
| SL-DiscTxPoolToAddMod-r12 | | |
| | | |
| SL-DiscTxPoolToAddMod-r12 : : = SEQUENCE { | | |
| poolIdentity-r12 | SL-TxPoolIdentity-r12, | |
| pool-r12 | SL-DiscResourcePool-r12 | |
| } | | |
| | | |
| SL-TF-IndexPairList-r12 : : = | SEQUENCE (SIZE (1..maxSL-IF-IndexPair-r12)) OF | |
| SL-TF-IndexPair-r12 | | |
| | | |
| SL-TF-IndexPair-r12 : : = | SEQUENCE { | |
| discSF-Index-r12 | INTEGER (1.. 200) | OPTIONAL, -- Need ON |
| discPRB-Index-r12 | INTEGER (1.. 50) | OPTIONAL -- Need ON |
| } | | |
| | | |
| -ASN1STOP | | |

However, sizes of existiong discovery information may be different due to different scenaros, which may be grerater than 232 bits, or may be less than 232 bits. If new discovery information is less than 232 bits and two PRB pairs are still selected to carry the discovery information, waste of resources will be resulted in; and if new discovery information is greater than 232 bits, it is possible that two PRB pairs are unable to carry the discovery information.

The embodiments of this disclosure shall be described below in detail.

### Embodiment 1

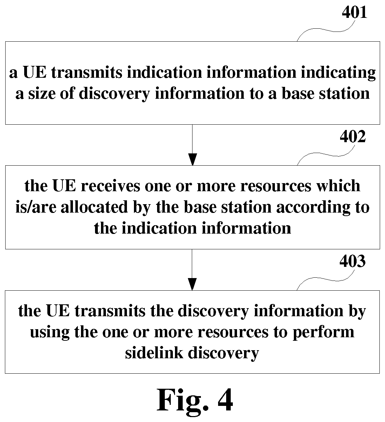

The embodiment of this disclosure provides a transmission method of discovery information, which shall be described from a UE side. FIG. 4 is a flowchart of the transmission method of discovery information of the embodiment of this disclosure. As shown in FIG. 4, the method includes:
block 401: a UE transmits indication information indicating a size of discovery information to a base station;
block 402: the UE receives one or more resources which is/are allocated by the base station according to the indication information; and
block 403: the UE transmits the discovery information by using the one or more resources to perform sidelink discovery.

In this embodiment, different from "transmitting the number of piece of discovery information to the base station" in an existing standard, the UE may transmit information indicating the number of pieces of each type of discovery information to the base station, and the base station may allocate one or more resources for sidelink discovery according to the information.

For example, in a case where the discovery information is relatively small, the base station may allocate only one PRB pair for transmitting the discovery information; and in a case where the discovery information is relatively large, the base station may allocate three PRB pairs for transmitting the discovery information; and so on.

Hence, resources for sidelink discovery may be flexibly allocated, and a case of waste of resources or being unable to carry discovery information may be reduced as possible even if sizes of discovery information are different due to different scenarios.

In an implementation, the indication information may include a type and a corresponding number of pieces of the discovery information. For example, the type and the corresponding number of pieces may be contained in a SidelinkUEInformation message. Furthermore, the type and the corresponding number of pieces of the discovery information may be carried by another message, and this disclosure is not limited thereto.

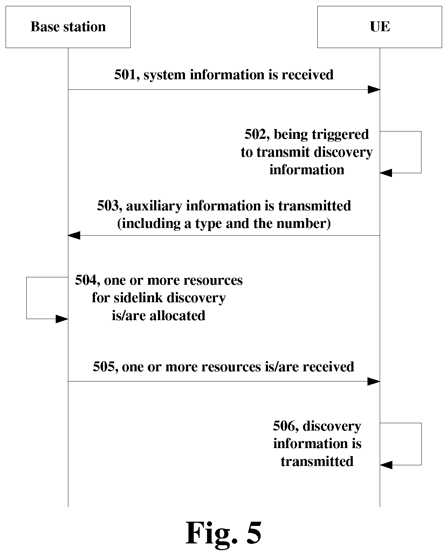

FIG. 5 is another flowchart of the transmission method of discovery information of the embodiment of this disclosure. As shown in FIG. 5, the method includes:
501: the UE receives system information;
for example, the UE may receive a system information block (SIB) 19 to learn system information on sidelink discovery; and the system information may contain one of the following two pieces of information: a resource pool used for transmitting discovery information, or providing no resource pool but informing the UE that it needs to enter into a connected state first if discovery information is transmitted;
502: the UE is triggered by a high layer (a ProSe protocol) to transmit discovery information;
for example, the high layer in this embodiment refers to, for example, a ProSe protocol layer; if the UE is in an idle state and the base station permits the UE to transmit discovery information only after it enters into a connected state, the UE will enter into a connected state;
503: the UE transmits auxiliary information to the base station;
in this implementation, the UE in a connected state may transmit the auxiliary information to the base station, so that the base station allocates resources for transmitting discovery information; the auxiliary information may include a type and the corresponding number of pieces of the discovery information; that is, it may be the following information: the number of each type of discovery information; the UE notifies the base station of the numbers of pieces of the types of discovery information; and according to these information, the base station may allocate suitable resources for transmitting discovery information;
for example, the discovery information may be divided into three types according to sizes thereof: type 1 (with a size of 0-116 bits), type 2 (with a size of 116-232 bits), and type 3 (with a size of more than 232 bits); and when a size of three pieces of discovery information needing to be transmitted is 160 bytes, the UE may transmit type 2 (denoting that a type of transmitted information is 2) and number 3 (denoting that the number of pieces of the transmitted information is 3) to the base station;
in this implementation, the auxiliary information may be contained in a SidelinkUEInformation message; thus, *discTxResourceReq-r12* in Table 1 is no longer applicable to discovery information of different sizes; hence, a new IE may be defined, which may, for example, contain the following three items:
   *disTxResourceReqtype1-r13;*
   *disTxResourceReqtype2-r13;* and
   *disTxResourceReqtype3-r13;*
which are of an INTEGER type, respectively, thereby carrying the type and the number of pieces of the discovery information; it should be noted that Table 3 is only an example of this disclosure, and the three new IEs may be contained in other messages; 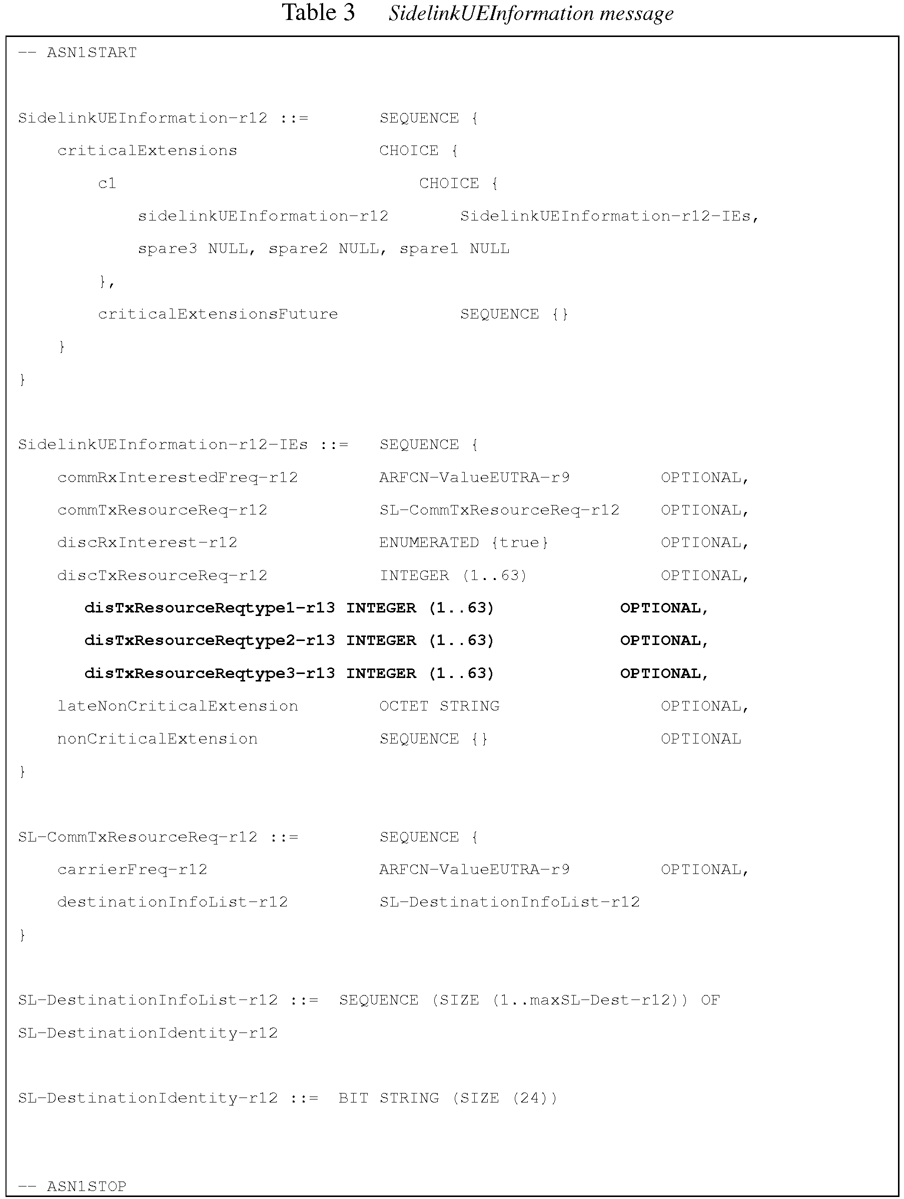
the auxiliary information is illustrated above only; however, this disclosure is not limited thereto, and a particular implementation may be determined according to an actual situation;
504: the base station allocates one or more resources for sidelink discovery for the UE according to the auxiliary information;
for example, the base station may allocate resources for the UE by using radio resource control (RRC) signaling; however, this disclosure is not limited thereto; and furthermore, the allocated resources may be scheduled resources, and may also be a resource pool that may be randomly selected by the UE;
505: the UE receives the one or more resources allocated by the base station; and
506: the UE transmits the discovery information by using the one or more resources to perform sidelink discovery.

In this implementation, the UE may transmit sidelink discovery information to other UE; and if the discovery information is relatively large (for example, resources of two PRB pairs cannot be accommodated), the discovery information may be segmented at a radio link control (RLC) layer, such that each transmission block (TB) may be accommodated in the two PRB pairs. Thus, what is different from transparently transmission of discovery information in an RLC layer in an existing standard is that a procedure for processing discovery information may be added into the RLC layer in the embodiment of this disclosure.

In another implementation, the indication information is contained in a buffer status report (BSR); and a size of discovery information needing to be transmitted is informed to the base station via the BSR, such that the base station allocates suitable resources.

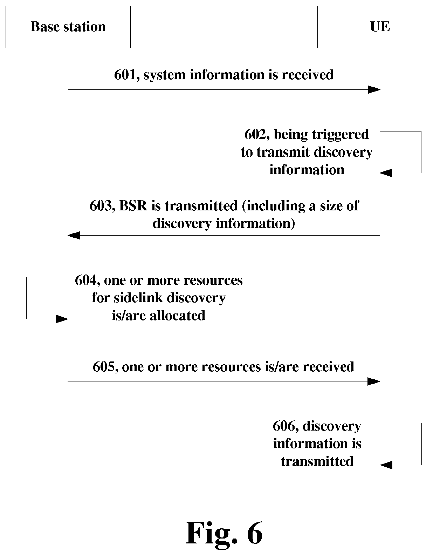

FIG. 6 is a further flowchart of the transmission method of discovery information of the embodiment of this disclosure. As shown in FIG. 6, the method includes:
601: the UE receives system information;
for example, the UE may receive an SIB 19 to learn system information on sidelink discovery; and the system information may contain one of the following two pieces of information: a resource pool used for transmitting discovery information, or providing no resource pool but informing the UE that it needs to enter into a connected state first if discovery information is transmitted;
602: the UE is triggered by a high layer (a ProSe protocol) to transmit discovery information;
for example, the high layer in this embodiment refers to, for example, a ProSe protocol layer; if the UE is in an idle state and the base station permits the UE to transmit discovery information only after it enters into a connected state, the UE will enter into a connected state;
603: the UE transmits a BSR to the base station, informing the base station of a size of a discovery signal needing to be transmitted, so that the base station allocates suitable resources;
in this implementation, the BSR may have no corresponding logic channel group, or may have a corresponding logic channel group; if the BSR has no corresponding logic channel group, a triggering condition for transmitting the BSR may be: an MAC layer is indicated by a high layer (such as a ProSe protocol) to transmit discovery information; and if the BSR has a corresponding logic channel group, a triggering condition for transmitting the BSR may be: there existing new discovery information arriving in the logic channel;
furthermore, if there exists no resource for transmitting the BSR, a transmission of scheduling request (SR) will be triggered to request the base station for resources;
604: the base station allocates one or more resources for sidelink discovery for the UE according to the BSR;
for example, the base station may allocate resources for the UE by using radio resource control (RRC) signaling; however, this disclosure is not limited thereto; and furthermore, the allocated resources may be scheduled resources, and may also be a resource pool that may be randomly selected by the UE;
605: the UE receives the one or more resources allocated by the base station;
606: the UE transmits the discovery information by using the one or more resources to perform sidelink discovery.

In this implementation, if the discovery information is relatively large (for example, resources of two PRB pairs cannot be accommodated), the discovery information may be segmented at an RLC layer, such that each TB may be accommodated in the two PRB pairs. Thus, what is different from transparently transmission of discovery information in an RLC layer in an existing standard is that a procedure for processing discovery information may be added into the RLC layer in the embodiment of this disclosure.

It can be seen from the above embodiment that the user equipment transmits indication information indicating a size of discovery information to the base station, receives one or more resources which are allocated by the base station according to the indication information, and transmits the discovery information by using the one or more resources to perform sidelink discovery. Hence, a case of waste of resources or being unable to carry discovery information may be reduced as possible even if sizes of discovery information are different due to different scenarios.

### Embodiment 2

The embodiment of this disclosure provides a transmission method of discovery information, which shall be described from a base station side. And contents of the embodiment of this disclosure identical to those in Embodiment 1 shall not be described herein any further.

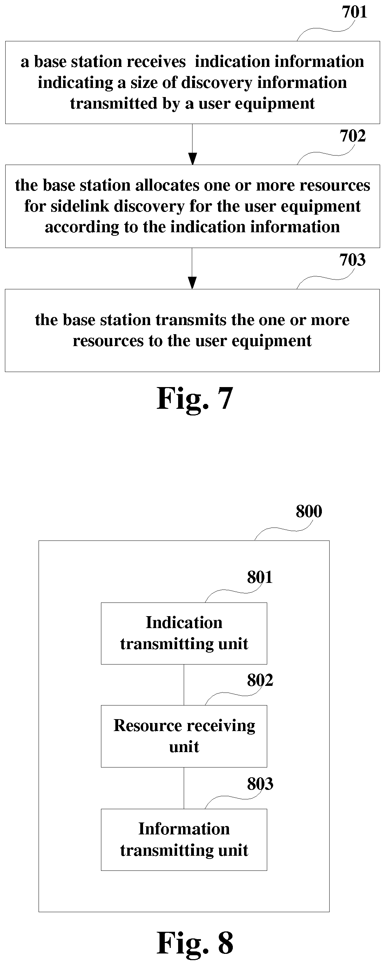

FIG. 7 is a flowchart of the transmission method of discovery information of the embodiment of this disclosure. As shown in FIG. 7, the method includes:
block 701: a base station receives indication information indicating a size of discovery information transmitted by a user equipment;
block 702: the base station allocates one or more resources for sidelink discovery for the user equipment according to the indication information; and
block 703: the base station transmits the one or more resources to the user equipment.

In an implementation, the indication information may include a type and a corresponding number of pieces of the discovery information. For example, the type and the corresponding number of pieces of the discovery information may be contained in a SidelinkUEInformation message.

In another implementation, the indication information is contained in a BSR.

It can be seen from the above embodiment that the user equipment transmits indication information indicating a size of discovery information to the base station, receives one or more resources which are allocated by the base station according to the indication information, and transmits the discovery information by using the one or more resources to perform sidelink discovery. Hence, a case of waste of resources or being unable to carry discovery information may be reduced as possible even if sizes of discovery information are different due to different scenarios.

### Embodiment 3

The embodiment of this disclosure provides a transmission apparatus of discovery information, configured in a UE. And the embodiment of this disclosure corresponds to the transmission method of discovery information in Embodiment 1, with identical contents being not going to be described herein any further.

FIG. 8 is a schematic diagram of the transmission apparatus of discovery information of the embodiment of this disclosure. As shown in FIG. 8, the transmission apparatus 800 of discovery information includes:
an indication transmitting unit 801 configured to transmit indication information indicating a size of discovery information to a base station;
a resource receiving unit 802 configured to receive one or more resources which are allocated by the base station according to the indication information; and
an information transmitting unit 803 configured to transmit the discovery information by using the one or more resources to perform sidelink discovery.

In an implementation, the indication information may include a type and a corresponding number of pieces of the discovery information. For example, the type and the corresponding number of pieces of the discovery information may be contained in a SidelinkUEInformation message.

In another implementation, the indication information is contained in a BSR. And the indication transmitting unit 801 is further configured to: transmit the BSR to the base station when an MAC layer receives high-layer indication that discovery information needs to be transmitted in a case where the discovery information has no corresponding logic channel; and transmit the BSR to the base station when the discovery information reaches the logic channel in a case where the discovery information has a corresponding logic channel.

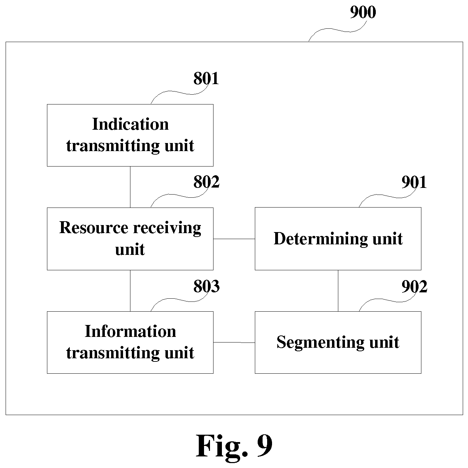

FIG. 9 is another schematic diagram of the transmission apparatus of discovery information of the embodiment of this disclosure. As shown in FIG. 9, the transmission apparatus 900 of discovery information includes an indication transmitting unit 801, a resource receiving unit 802 and an information transmitting unit 803, as described above.

As shown in FIG. 9, the transmission apparatus 900 of discovery information may further include:
a determining unit 901 configured to determine whether the discovery information can be accommodated by two PRB pairs; and
a segmenting unit 902 configured to segment the discovery information at an RLC layer when the discovery information cannot be accommodated by two PRB pairs, so that each transport block can be accommodated in the two PRB pairs.

The embodiment of this disclosure further provides a UE, configured with the above-described transmission apparatus 800 of discovery information or the transmission apparatus 900 of discovery information.

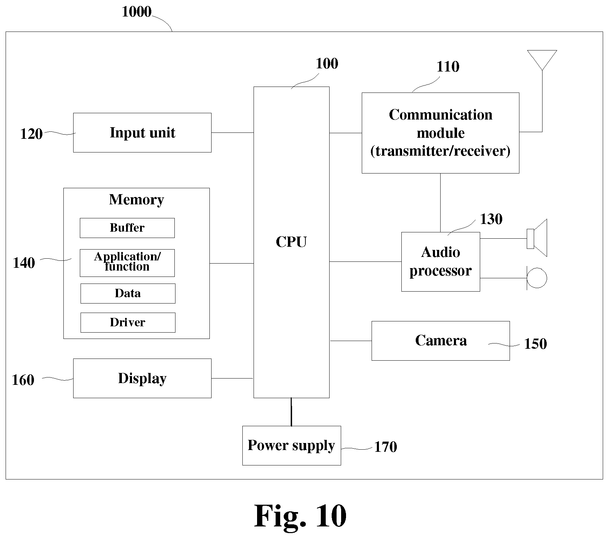

FIG. 10 is a schematic diagram of a structure of the UE of the embodiment of this disclosure. As shown in FIG. 10, the UE 1000 may include a central processing unit (CPU) 100 and a memory 140, the memory 140 being coupled to the central processing unit 100. It should be noted that this figure is illustrative only, and other types of structures may also be used, so as to supplement or replace this structure and achieve a telecommunications function or other functions.

In an implementation, the functions of the transmission apparatus 800 of discovery information or the transmission apparatus 900 of discovery information may be integrated into the central processing unit 100. For example, the central processing unit 100 may be configured to perform following control: transmitting indication information indicating a size of discovery information to a base station; receiving one or more resources which is/are allocated by the base station according to the indication information; and transmitting the discovery information by using the one or more resources to perform sidelink discovery.

In another implementation, the transmission apparatus 800 of discovery information or the transmission apparatus 900 of discovery information and the central processing unit 100 may be configured separately. For example, the transmission apparatus 800 of discovery information or the transmission apparatus 900 of discovery information may be configured as a chip connected to the central processing unit 100, with its functions being realized under control of the central processing unit 100.

As shown in FIG. 10, the UE 1000 may further include a communications module 110, an input unit 120, an audio processor 130, a memory 140, a camera 150, a display 160 and a power supply 170. Functions of the above components are similar to those in the relevant art, and shall not be described herein any further. It should be noted that the UE 1000 does not necessarily include all the parts shown in FIG. 10, and furthermore, the UE 1000 may include parts not shown in FIG. 10, and the relevant art may be referred to.

It can be seen from the above embodiment that the user equipment transmits indication information indicating a size of discovery information to the base station, receives one or more resources which is/are allocated by the base station according to the indication information, and transmits the discovery information by using the one or more resources to perform sidelink discovery. Hence, a case of waste of resources or being unable to carry discovery information may be reduced as possible even if sizes of discovery information are different due to different scenarios.

### Embodiment 4

The embodiment of this disclosure provides a transmission apparatus of discovery information, configured in a base station. And the embodiment of this disclosure corresponds to the transmission method of discovery information in Embodiment 2, with identical contents being not going to be described herein any further.

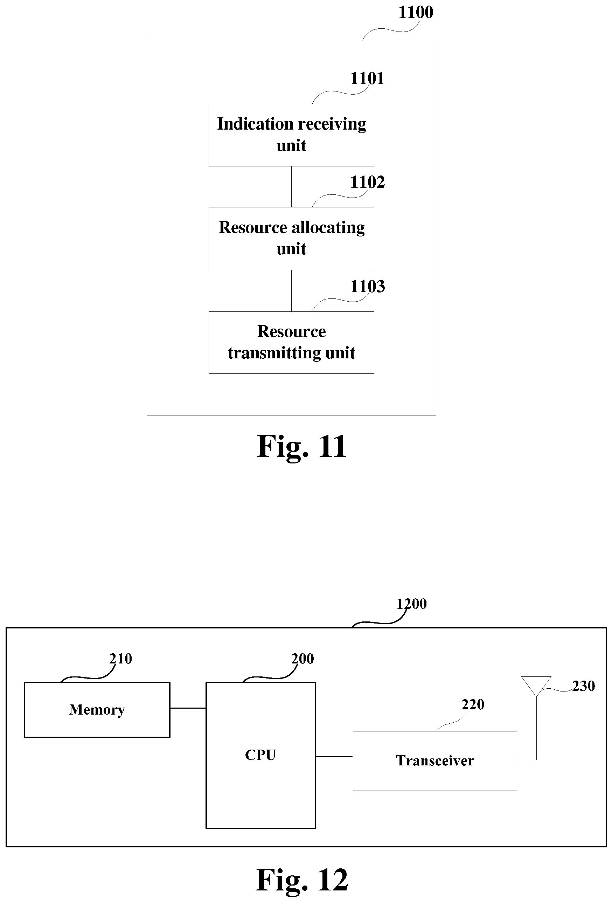

FIG. 11 is a schematic diagram of the transmission apparatus of discovery information of the embodiment of this disclosure. As shown in FIG. 11, the transmission apparatus 1100 of discovery information includes:
an indication receiving unit 1101 configured to receive indication information indicating a size of discovery information transmitted by a user equipment;
a resource allocating unit 1102 configured to allocate one or more resources for sidelink discovery for the user equipment according to the indication information; and
a resource transmitting unit 1103 configured to transmit the one or more resources to the user equipment.

In an implementation, the indication information may include a type and a corresponding number of pieces of the discovery information. For example, the type and the corresponding number of pieces of the discovery information may be contained in a SidelinkUEInformation message.

In another implementation, the indication information is contained in a BSR.

The embodiment of this disclosure further provides a base station, configured with the above-described transmission apparatus 1100 of discovery information.

FIG. 12 is a schematic diagram of a structure of the base station of the embodiment of this disclosure. As shown in FIG. 12, the base station 1200 may include a central processing unit (CPU) 200 and a memory 210, the memory 210 being coupled to the central processing unit 200. The memory 210 may store various data, and furthermore, it may store a program for information processing, and execute the program under control of the central processing unit 200.

For example, the base station 1200 may carry out the transmission method of discovery information described in Embodiment 1. And the central processing unit 200 may be configured to carry out the functions of the transmission apparatus 1100 of discovery information, that is, the central processing unit 200 may be configured to perform the following control: receiving indication information indicating a size of discovery information transmitted by a user equipment; allocating one or more resources for sidelink discovery for the user equipment according to the indication information; and transmitting the one or more resources to the user equipment.

Furthermore, as shown in FIG. 12, the base station 1200 may include a transceiver 220, and an antenna 230, etc. Functions of the above components are similar to those in the relevant art, and shall not be described herein any further. It should be noted that the base station 1200 does not necessarily include all the parts shown in FIG. 12, and furthermore, the base station 1200 may include parts not shown in FIG. 12, and the relevant art may be referred to.

It can be seen from the above embodiment that the user equipment transmits indication information indicating a size of discovery information to the base station, receives one or more resources which is/are allocated by the base station according to the indication information, and transmits the discovery information by using the one or more resources to perform sidelink discovery. Hence, a case of waste of resources or being unable to carry discovery information may be reduced as possible even if sizes of discovery information are different due to different scenarios.

### Embodiment 5

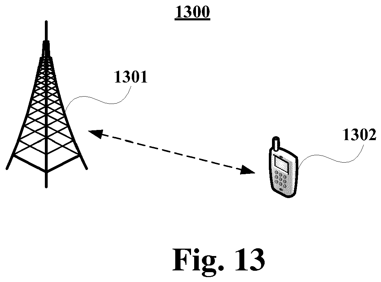

The embodiment of this disclosure provides a communications system, with contents identical to those in embodiments 1-4 being not going to be described herein any further. FIG. 13 is a schematic diagram of the communications system of the embodiment of this disclosure. As shown in FIG. 13, the communications system 1300 includes: a base station 1301 and a UE 1302.

The UE 1302 is configured to transmit indication information indicating a size of discovery information to the base station 1301, receive one or more resources which is/are allocated by the base station 1301 according to the indication information, and transmit the discovery information by using the one or more resources to perform sidelink discovery.

And the base station 1301 is configured to receive indication information transmitted by the UE 1302, allocate one or more resources for the sidelink discovery for the UE 1302 according to the indication information, and transmit the one or more resources to the UE 1302.

In an implementation, the indication information includes a type and a corresponding number of pieces of the discovery information.

In another implementation, the indication information is contained in a BSR.

An embodiment of the present disclosure provides a computer readable program code, which, when executed in a UE, will cause a computer unit to carry out the transmission method of discovery information described in Embodiment 1 in the UE.

An embodiment of the present disclosure provides a computer readable medium, including a computer readable program code, which will cause a computer unit to carry out the transmission method of discovery information described in Embodiment 1 in a UE.

An embodiment of the present disclosure provides a computer readable program code, which, when executed in a base station, will cause a computer unit to carry out the transmission method of discovery information described in Embodiment 2 in the base station.

An embodiment of the present disclosure provides a computer readable medium, including a computer readable program code, which will cause a computer unit to carry out the transmission method of discovery information described in Embodiment 2 in a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communications combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A transmission apparatus of discovery information, configured in a user equipment, the apparatus comprising:
an indication transmitting unit configured to transmit indication information indicating a size of discovery information to a base station;
a resource receiving unit configured to receive one or more resources which is/are allocated by the base station according to the indication information; and
an information transmitting unit configured to transmit the discovery information by using the one or more resources to perform sidelink discovery.

2. The transmission apparatus of discovery information according to claim 1, wherein the indication information comprises a type and a corresponding number of pieces of the discovery information.

3. The transmission apparatus of discovery information according to claim 2, wherein the type and the corresponding number of pieces of the discovery information are contained in a SidelinkUEInformation message.

4. The transmission apparatus of discovery information according to claim 1, wherein the indication information is contained in a buffer status report.

5. The transmission apparatus of discovery information according to claim 4, wherein the indication transmitting unit is further configured to:
transmit the buffer status report to the base station when a medium access control layer receives high-layer indication that discovery information needs to be transmitted in a case where the discovery information has no corresponding logic channel;
and transmit the buffer status report to the base station when discovery information reaches the logic channel in a case where the discovery information has a corresponding logic channel.

6. The transmission apparatus of discovery information according to claim 1, wherein the apparatus further comprises:
a determining unit configured to determine whether the discovery information can be accommodated by two physical resource block pairs; and
a segmenting unit configured to segment the discovery information at a radio link control layer when the discovery information cannot be accommodated by two physical resource block pairs, so that each transport block can be accommodated in the two physical resource block pairs.

7. A transmission apparatus of discovery information, configured in a base station, the apparatus comprising:
an indication receiving unit configured to receive indication information indicating a size of discovery information transmitted by a user equipment;
a resource allocating unit configured to allocate one or more resources for sidelink discovery for the user equipment according to the indication information; and
a resource transmitting unit configured to transmit the one or more resources to the user equipment.

8. The transmission apparatus of discovery information according to claim 7, wherein the indication information comprises a type and a corresponding number of pieces of the discovery information.

9. The transmission apparatus of discovery information according to claim 8, wherein the type and the corresponding number of pieces of the discovery information are contained in a SidelinkUEInformation message.

10. The transmission apparatus of discovery information according to claim 7, wherein the indication information is contained in a buffer status report.

11. A communications system, comprising:
a user equipment configured to transmit indication information indicating a size of discovery information to a base station, receive one or more resources which is/are allocated by the base station according to the indication information, and transmit the discovery information by using the one or more resources to perform sidelink discovery; and
a base station configured to receive indication information transmitted by the user equipment, allocate one or more resources for the sidelink discovery for the user equipment according to the indication information, and transmit the one or more resources to the user equipment.

12. The communications system according to claim 11, wherein the indication information comprises a type and a corresponding number of pieces of the discovery information.

13. The communications system according to claim 11, wherein the indication information is contained in a buffer status report.
